# EUROPÄISCHE PATENTSCHRIFT

(11) **EP 2 928 636 B1**
(45) Veröffentlichungstag und Bekanntmachung des Hinweises auf die Patenterteilung: **07.09.2016**
(21) Anmeldenummer: 13818987.3
(22) Anmeldetag: 09.12.2013
(51) Int. Cl.: B23K 37/053, B23K 37/04, B23P 19/10, B23K 26/28, B29C 65/00

(54) **VORRICHTUNG ZUM EINSPANNEN UND AUSRICHTEN VON SEGMENTARTIG AUSGEBILDETEN, DÜNNWANDIGEN UND HOHLPROFILIERTEN BAUTEILEN SOWIE DEREN VERWENDUNG**
DEVICE FOR CLAMPING AND ORIENTING SEGMENTED, THIN-WALLED, HOLLOW PROFILED COMPONENTS, AND USE THEREOF
DISPOSITIF DESTINÉ AU SERRAGE ET À L'ALIGNEMENT DE PIÈCES PROFILÉES CREUSES, À PAROIS MINCES ET SOUS FORME DE SEGMENTS, ET SON UTILISATION

(30) Priorität: 10.12.2012 DE 102012024168; 19.09.2013 DE 102013110371
(43) Veröffentlichungstag der Anmeldung: 14.10.2015
(73) Patentinhaber: MT Aerospace AG, 86153 Augsburg (DE)
(72) Erfinder: HUBER, Willibald, 85305 Jetzendorf (DE)
(74) Vertreter: Grape & Schwarzensteiner
(86) Internationale Anmeldenummer: PCT/EP2013/075932
(87) Internationale Veröffentlichungsnummer: WO 2014/090737

(56) Entgegenhaltungen:
- CN-U- 201 711 557
- DE-C2- 10 055 257
- GB-A- 835 030
- US-A- 138 947
- US-A- 892 287

## Beschreibung

Die vorliegende Erfindung betrifft eine Vorrichtung zum Einspannen und Ausrichten von segmentartig ausgebildeten, dünnwandigen und hohlprofilierten Bauteilen gemäß dem Oberbegriff des Anspruchs 1 (siehe, z.B. DE 100 55 257 A1) und deren Verwendung (siehe Anspruch 17).

Vorrichtungen zum Einspannen von hohlprofilierten Werkstücken mit kreisförmigen Querschnitten, zum Beispiel Zylinderschüssen, Kugelschalen, Domen etc., die von außen gefräst, miteinander verschweißt oder sonstwie bearbeitet werden sollen, sind allgemein bekannt. Derartige Vorrichtungen bestehen im Wesentlichen aus radial angeordneten Segmenten, die beispielsweise mittels konischen Dornen, hydraulischen Kolben oder Ähnlichem gegen die Innenwände der Werkstücke ausfahrbar sind. Derartige Vorrichtungen sind unter anderem zur Fertigung von segmentartig ausgebildeten, dünnwandigen und hohlprofilierten Bauteilen, wie etwa Druckbehältern zur Speicherung kryogener Flüssigkeiten, insbesondere von flüssigem Wasserstoff (LH2), vorgesehen. Solche Druckbehälter bzw. Tanks können in allen automotiven Bereichen, wie der Luft- und Raumfahrt, im Schiffs-und Bootsbau und insbesondere in der Automobilindustrie, Anwendung finden. Ein großes Problem bei der Fertigung solcher Druckbehälter resultiert aus deren beliebig variierenden Formen, deren außerordentlich großen Abmessungen mit einem Durchmesser von bis ca. 6,0 m oder mehr und einer Länge von bis zu 25 m sowie im Verhältnis dazu extrem geringen Wandstärken mit einer Wanddicke im Bereich von ca. 3,3 mm bis maximal 7 mm. Beispielhaft ist eine solche Vorrichtung in der DE 100 55 257 C2 beschrieben. Diese Vorrichtung hat sich in der Praxis ausgesprochen bewährt, obgleich sich deren Herstellung und Betrieb als verhältnismäßig aufwendig herausgestellt hat, da jedem Spannelement eine gesonderte Antriebseinrichtung, etwa in Form eines Schrittmotors oder einer Kolbeneinrichtung, als Spannbetätigungselement zugeordnet ist. Darüber hinaus ist deren Einsetzbarkeit auf die Herstellung von hohlprofilierten Werkstücken, die eine rein zylindrische Form aufweisen und gleichzeitig einen Zugang in das Innere der Werkstücke zulassen, beschränkt. So ist diese Vorrichtung aufgrund der zentrischen Anordnung der Spannelemente in einer Ebene senkrecht um die Längsachse gleichmäßig verteilt und wegen der Ausbildung der Spannelemente zueinander zur Herstellung von zum Beispiel Druckbehältern bzw. Tanks, die teilweise geschlossen und somit von außen eingeschränkt zugänglich sind, nicht geeignet.

Weiterhin ist in der DE 35 43 353 A1 eine Spanneinrichtung mit einer Mehrzahl von in mindestens einer Spannebene angeordneten, unabhängig voneinander beweglichen bzw. betätigbaren Spannelementen zur verformungsarmen Einspannung extrem dünnwandiger Werkstücke, insbesondere von Ringen und Rohren, beschrieben. Um derartige verformungsempfindlichen Werkstücke zunächst zu zentrieren, ist ein zentraler Antrieb in Form eines druckmittelbetätigten Kolbens vorgesehen. Durch eine axiale Bewegung des Kolbens werden die Spannelemente gemeinsam radial nach außen verschoben. Um die Werkstücke nach deren Zentrierung ohne nennenswerte Verformung ausgleichend einspannen zu können, ist jedes Spannelement zusätzlich mit einem individuell druckmittelbetätigten Antrieb und einem/einer diesem separat zugeordneten Fühler oder Taststange versehen, der/die bei Betätigung der Spannelemente eine Annäherung bzw. nahezu kraftlose Anlage der Spannelemente an den Werkstücken feststellt und entweder eine Abschaltung des individuellen Antriebs oder eine Klemmung des Spannelementes bewirkt.

In der DE 694 23 929 T2 ist eine Innenrohrklammer zum Ausrichten von zwei miteinander zu verschweißenden Rohren vorgeschlagen. Dabei werden zwei Sätze von Rohrspannvorrichtungen mittels jeweils einer Luftzylinder-Anordnung radial hin zu bzw. weg von der Innenwandung des jeweils zugeordneten Rohres durch eine axiale Verschiebung eines druckluftbetätigbaren Kolbens der jeweiligen Luftzylinder-Anordnung bewegt.

Aus der US 6 119 916 A geht des Weiteren eine Vorrichtung zum Ausrichten und Klemmen von zwei miteinander zu verschweißenden Rohren hervor. Eine Vielzahl von in einer Spannebene angeordneten Spannelementen ist radial von innen nach außen hin zu der bzw. von außen nach innen weg von der Innenwandung der Rohre bewegbar. Die Spannelemente sind dabei jeweils über Gelenkstangen in Kulissenführungen einer Scheibe aufgenommen, die auf einer mittigen Achse gelagert und durch pneumatisch oder hydraulisch wirkende Betätigungselemente in und entgegen dem Uhrzeigersinn begrenzt drehbar ist. Durch die Drehbewegung der Scheibe sind die Spannelemente radial verschiebbar.

Darüber hinaus zeigt die US 5 444 902 A eine Vorrichtung zum Rundrichten und Halten eines Zylinders. Dabei sind ein oberer und unterer Rahmen zur Aufnahme des Zylinders im Bereich von dessen oberen und unteren Ende vorgesehen. An jedem der Rahmen ist eine Vielzahl von radial angeordneten Schraubspindeln vorgesehen, wobei jeweils ein Spannelement an einem Paar von Schraubspindeln angeordnet ist. Über Gleichstrommotoren sind die Schraubspindeln und damit die Spannelemente radial nach außen hin zu und nach innen weg von dem rundzurichtenden und zu haltenden Zylinder verfahrbar.

Die CN 201 711 557 U beschreibt eine Vorrichtung zur inneren Abstützung eines Rohöl-Bohrrohres bzw. -Rammrohres. Eine flexible Stützlippe oder dergleichen -element aus Kunststoff ist mittels einer Keilscheibe aus einer im Wesentlichen axialen Ausrichtung radial nach außen biegbar und sodann zwischen der schrägen Umfangsfläche der Keilscheibe und der Innenwandung des Bohrrohres verkeilbar, um das Bohrrohr während außenseitigen Bearbeitungen abzustützen.

Die GB 835 030 A zeigt eine Schweißvorrichtung, die zum Einspannen und Ausrichten von segmentartig ausgebildeten, dünnwandigen und hohlprofilierten Bauteilen bestimmt ist, welche zu der Vorrichtung nach der DE 100 55 257 C7 konstruktiv vergleichbar ist.

Die US 892 287 A offenbart eine Vorrichtung zum Spreizen und Montieren von Kolbendichtringen auf Kolben. Die Vorrichtung besteht aus einer Kreisplatte mit einer Vielzahl von zueinander regelmäßig angeordneten Lammellenplättchen. Die Lamellenplättchen werden durch eine innere Scheibe, welche über ein Gewinde mit der Kreisplatte zusammenwirkt und durch Drehen einer Kurbel hin zu oder weg von der Kreisplatte bewegbar ist, mehr oder weniger nach außen aufgespreizt. Dabei wird der Kolbendichtring aufgeweitet, bis dieser ohne weiteres auf den Kolben selbst geschoben und sodann in der entsprechenden Nut befestigt werden kann.

Schließlich ist aus der US 138 947 A ein Expansionsmandrell bekannt, um die Durchmessergröße von Werkzeugen variabel einzustellen.

Der vorliegenden Erfindung liegt daher die Aufgabe zugrunde, eine Vorrichtung zum Einspannen und Ausrichten von segmentartig ausgebildeten, dünnwandigen und hohlprofilierten Bauteilen zur Verfügung zu stellen, welche konstruktiv besonders einfach ausgestaltet und zugleich ausgesprochen vielseitig verwendbar ist, und deren Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung der erfindungsgemäßen Vorrichtung zum Einspannen und Ausrichten von segmentartig ausgebildeten, dünnwandigen und hohlprofilierten Bauteilen, umfassend eine auf oder an einer Basis abgestützte Tragstruktur oder dergleichen Rahmengestell und eine von der Tragstruktur aufgenommene und gehaltene Einrichtung zum Einspannen von zwei segmentartig ausgebildeten, dünnwandigen und hohlprofilierten Bauteilen, wobei die Spanneinrichtung derart ausgebildet ist, dass die zwei Bauteile im Bereich von deren gemeinsamer Trennebene von der Spanneinrichtung senkrecht zu der Längsachse der Tragstruktur und radial von innen nach außen beaufschlagbar sind, und wenigstens zwei in einer gemeinsamen Ebene angeordnete und radial von innen nach außen, und umgekehrt, verschiebbare Spannelemente mit die zwei Bauteile beaufschlagenden Spannflächen aufweist, wobei die Spanneinrichtung die wenigstens zwei Spannelemente und ein die wenigstens zwei Spannelemente gemeinsam beaufschlagendes Spannbetätigungselement umfasst, wobei das Spannbetätigungselement der Spanneinrichtung keilringförmig oder als ein, insbesondere einteiliger oder segmentartig geteilter, Keilring ausgebildet ist und die wenigstens zwei Spannelemente durch Verschiebung auf oder parallel zu oder im Wesentlichen auf oder parallel zu der Längsachse der Tragstruktur radial von innen nach außen beaufschlagt, wobei das Spannbetätigungselement der Spanneinrichtung an einem Stützelement in Form eines Stützringes radial nach innen abstützbar ist, wird eine besonders einfache, zudem kompakte und stabile Bauweise der Vorrichtung erreicht. Gleichzeitig eignet sich die erfindungsgemäße Vorrichtung infolge einer durch das die wenigstens zwei Spannelemente gemeinsam beaufschlagende Spannbetätigungselement zu erreichenden Raumaufteilung, Raumausnutzung und damit Platzseinsparung auf besonders vielseitige Weise zur Herstellung von Druckbehältern bzw. Tanks aus Bauteilen von beliebiger Ausgestaltung und Form. Durch die spezielle Ausbildung des Spannbetätigungselementes ist es möglich, zwei Bauteile von beliebiger Form im Bereich von deren gemeinsamer Trennebene senkrecht zu der Längsachse der Tragstruktur und radial von innen nach außen einzuspannen und zueinander auszurichten. So können zwei Bauteile von zum Beispiel im Wesentlichen zylindrischer Form oder ein Bauteil mit einem freikragenden Bauteilelement, an das ein Bauteil von zylindrischer Form anzuformen ist, von der Spanneinrichtung der erfindungsgemäßen Vorrichtung radial von innen nach außen beaufschlagt werden. Mit der Vorrichtung nach der Erfindung sind somit Bauteile unterschiedlichster Ausgestaltung und Form etwa zu Druckbehältern bzw. Tanks herstellbar, was im Stand der Technik bisher grundsätzlich nur von mehreren verschiedenen Vorrichtungen bewerkstelligt werden konnte, jeweils speziell auf die Ausgestaltung und Form der Bauteile einerseits abgestimmt und von der daraus resultierenden Zugänglichkeit in deren Inneres andererseits abhängig. Selbst komplexe mehrteilige Druckbehälter bzw. Tanks sind mit der erfindungsgemäßen Vorrichtung somit herstellbar. Die erfindungsgemäße Vorrichtung ist somit besonders vielseitig einsetzbar. Dabei lassen sich selbst Druckbehälter mit außerordentlich großen Abmessungen, wie mit einem Durchmesser von bis ca. 6,0 m oder mehr und einer Länge von bis zu 25 m, mit einer Genauigkeit von bis zu 0,1 mm bei einem Wandstärkenbereich von ca. 2 mm bis etwa 20 mm erhalten. Im Ergebnis lassen sich Behälter, die aus mehreren solcher Bauteile zusammenzusetzen sind, unterschiedlichste geometrische Formen aufweisen, einen in deren Inneres beliebig variierenden und/oder eingeschränkten Zugang besitzen, unterschiedlichsten Fertigungsschritten unterzogen werden, etc., mit der erfindungsgemäßen Vorrichtung weitgehend vollständig, d.h. mittels ein- und derselben Vorrichtung, herstellen. Ein, auch zwischenzeitliches, Einspannen des/der Bauteile/s in/auf anderen Vorrichtungen, die speziell für bestimmte Fertigungsschritte vorgesehen sind, mit dem sich daraus ableitenden Aufwand ist nicht erforderlich.

Wesentliche Vorteile, die sich mit der erfindungsgemäßen Vorrichtung mit einer Spanneinrichtung, welche keilringförmig oder als Keilring ausgestaltet und somit als quasi Keilspanneinrichtung ausgebildet ist, erhalten lassen, sind weiter: Mit der erfindungsgemäßen Spanneinrichtung lassen sich radiale Kräfte und/oder Momente von zum Teil bis 10 t und mehr, die bei einer Bearbeitung des/der Bauteile/s, zum Beispiel beim Rührreib (FSW)-Schweißen, auftreten, über deren gesamten Umfang gleichmäßig und/oder gleichbleibend verteilen. Mit der Spanneinrichtung ist eine stufenlose Verfahrbarkeit ermöglicht. Es lassen sich mit der Spanneinrichtung auf kleinem Raum und/oder mit schon geringfügiger Verschiebung extrem hohe Kräfte auf die Bauteile ausüben. Mit der erfindungsgemäßen Spanneinrichtung lassen sich darüber hinaus radiale Kräfte und/oder Momente von zum Teil bis 100 t und mehr, die bei einer Bearbeitung des/der Bauteile/s, zum Beispiel beim Wolfram-Inertgas (WIG)-Schweißen, auftreten, erzeugen; um eine homogene Aufweitung des/der Bauteile/s zu ermöglichen. Eine solche Aufweitung kann gewünscht oder sogar notwendig sein, um beispielsweise einen bei der Bearbeitung des/der Bauteile/s, etwa beim Wolfram-Inertgas (WIG)-Schweißen, auftretenden Schrumpf auszugleichen, um die Abmessungen des/der Bauteile/s vor und nach der Bearbeitung konstant zu halten. Schließlich ist die Spanneinrichtung besonders vielseitig einsetzbar. So kann die Spanneinrichtung zusammen mit unterschiedlichsten Einrichtungen zur Bearbeitung des/der Bauteile/s verwendet werden. Die Spanneinrichtung kann in besonders vorteilhafter Weise zum Einsatz gebracht werden, wenn das/die Baüteil/e zum Beispiel geschweißt bzw. miteinander verschweißt werden sollen, und zwar gänzlich unabhängig von dem jeweiligen Schweißverfahren. Die Spanneinrichtung kann daher gleichermaßen mit einer Rührreib (FSW)-Schweißeinrichtung oder einer Wolfram-Inertgas (WIG)-Schweißeinrichtung bzw. jeder sonstigen Schweißeinrichtung eingesetzt werden.

Vorteilhafte konstruktive Einzelheiten der erfindungsgemäßen Vorrichtung sind in den Ansprüchen 2 bis 16 beschrieben.

Entsprechend den Merkmalen nach Anspruch 2 umfasst das Spannbetätigungselement der Spanneinrichtung in vorteilhafter Weise wenigstens eine der Längsachse der Tragstruktur abgewandte Schrägfläche, die mit (einer) der Längsachse der Tragstruktur zugewandten, entsprechend ausgebildeten Schrägfläche/n der wenigstens zwei Spannelemente in Eingriff steht, derart, dass die wenigstens zwei Spannelemente durch Verschiebung des Spannbetätigungselementes auf oder parallel zu oder im Wesentlichen auf oder parallel zu der Längsachse der Tragstruktur radial von innen nach außen, und umgekehrt, verschiebbar sind. Die Schrägfläche/n kann/können dabei einteilig ausgestaltet sein. Durch eine Verschiebung des Spannbetätigungselementes parallel zu der Längsachse der Tragstruktur, die eine radiale Verschiebung der wenigstens zwei Spannelemente zur Folge hat, lässt sich eine optimale Raumaufteilung, Raumausnutzung und damit Platzseinsparung erreichen.

Dabei liegt es im Rahmen der Erfindung, dass das Spannbetätigungselement der Spanneinrichtung nach Anspruch 3 anstelle einer einteiligen Schrägfläche eine Vielzahl von Schrägflächen, die der Längsachse der Tragstruktur abgewandt und jeweils planar ausgebildet sind, umfasst. Hierdurch lassen sich mögliche Verspannungen zwischen den wenigstens zwei Spannelementen und dem Spannbetätigungselement, die beispielsweise durch Fertigungsungenauigkeiten und geometrische Rahmenbedingungen entstehen, und folglich eine Schwergängigkeit der Spanneinrichtung insgesamt vermeiden. Bei einer einteiligen Schrägfläche kommt es zwischen dem Spannelement und dem Spannbetätigungselement lediglich in einer Relativstellung zueinander zu einer genau flächigen Auflage. Sobald das Spannbetätigungselement axial verschoben wird, passen die gekrümmten Flächen nicht mehr exakt zueinander und aus der flächigen Auflage wird eine lineare oder sogar punktförmige Auflage, welche zu inhomogenen Spannungsverteilungen bzw. Verspannungen führt. Ein weiterer Vorteil der planaren Schrägflächen besteht in einem weitaus größeren Hub des Spannbetätigungselementes, welcher wiederum zu einer höheren Kraftaufbringung bei gleichbleibenden Genauigkeiten führt.

Das Stützelement kann nach Anspruch 4 vorzugsweise in Form eines einteiligen oder mehrteiligen Stützringes ausgebildet sein. Das Stützelement dient als Führungselement oder -ring.

In vorteilhafter Weise ist das Spannbetätigungselement der Spanneinrichtung nach Anspruch 5 mit Langlöchern für an der Tragstruktur, insbesondere an dem Stützring der Tragstruktur, befestigte Führungselemente, insbesondere Bolzen, zur Aufnahme und Führung der wenigstens zwei Spannelemente versehen.

Von sehr großer Bedeutung für eine zusätzliche Vereinfachung der Bauweise und eine weitergehende Erhöhung der Montage- bzw. Fertigungsgenauigkeit der erfindungsgemäßen Vorrichtung sind die Maßnahmen des Anspruchs 6, wonach die Spanneinrichtung einen, insbesondere aus einem hochwarmfesten Material ausgebildeten, Wurzelstützring oder Badsicherungsring, der den wenigstens zwei Spannelementen an den die zwei Bauteile beaufschlagenden Spannflächen zugeordnet ist, umfasst. Mit einem solchen Wurzelstützring lassen sich eine ganze Reihe von Vorteilen erhalten: So sind die wenigstens zwei Spannelemente im Spannzustand zueinander geringfügig, d.h. in der Praxis durch Spalte von bis zu ungefähr 10 mm, insbesondere von etwa 1,0 bis 1,5 mm, beabstandet. Der Wurzelstützring überbrückt diese Spalte und bildet somit eine durchgehende, kontinuierliche und glatte Spannfläche im Bereich der gemeinsamen Trennebene der zwei Bauteile. Die zwei Bauteile, die nach dem Einspannen und Ausrichten von außen, beispielsweise durch Fräsen oder Schweißen, insbesondere Rührreib (FSW)-Schweißen, bearbeitet werden, können sich demzufolge im Bereich der gemeinsamen Trennebene nicht verformen. Vornehmlich aber wird durch den Wurzelstützring vermieden, dass das beispielsweise beim Rührreib (FSW)-Schweißen auftretende plastifizierte Material durch die extrem hohen Expansionskräfte der Spannvorrichtung von bis zu 200 t und die von einem Werkzeug einer Rührreib (FSW)-Schweißeinrichtung erzeugten Anpresskräfte von ca. 6 t durch die Spalte zwischen den Spannelementen gedrückt wird. Eine Beschädigung der Spannelemente durch die hohen Temperaturen im Schweißbereich ist sicher ausgeschlossen. Mit einem solchen Badsicherungsring lässt sich beispielsweise beim Wolfram-Inertgas (WIG)-Schweißen in ganz vorteilhafter Weise auf eine Wurzelnahtbeobachtung, die im Allgemeinen aus Zwecken der Qualitäts- und Abnahmeprüfung vorgenommen wird, verzichten.

In diesem Zusammenhang ist erfindungsgemäß vorgesehen, dass der Wurzelstützring oder der Badsicherungsring nach Anspruch 7 von einer in den wenigstens zwei Spannelementen vorgesehenen Nut oder Ausnehmung aufnehmbar ist, derart, dass die den zwei Bauteilen zugewandte Oberfläche des Wurzelstützringes oder des Badsicherungsringes und die die zwei Bauteile beaufschlagenden Spannflächen zueinander in einer Ebene fluchten.

Zudem ist es von Vorteil, den Badsicherungsring nach Anspruch 8 mit einer Ausnehmung oder dergleichen Nut zur teilweisen Aufnahme von Schweißmaterial im Schweißbereich zu versehen. Zu verschweißendes Material kann somit zwangsfrei aus dem Bereich der Schweißnaht in die Ausnehmung oder dergleichen Nut abfließen. Mögliche Gefügeveränderungen des Materials in der Schweißnaht bzw. im Schweißbereich während des Abkühlens lassen sich somit verhindern.

Entsprechend den Maßnahmen des Anspruchs 9 sind der Wurzelstützring und der Badsicherungsring miteinander auswechselbar. Von besonderem Vorteil ist es dabei, den Wurzelstützring und den Badsicherungsring einander korrespondierend, d.h. aufeinander in Form und Abmessung abgestimmt, auszubilden. Die erfindungsgemäße Vorrichtung kann somit zum Beispiel sowohl zum Rührreib (FSW)-Schweißen als auch zum Wolfram-Inertgäs (WIG)-Schweißen usw. eingesetzt werden. Dadurch, dass sich unterschiedlichste Schweißverfahren durchführen lassen, ist die Vielseitigkeit der erfindungsgemäßen Vorrichtung ausgesprochen groß.

Weiter liegt es im Rahmen der Erfindung, dass die Spanneinrichtung nach Anspruch 10 eine an der Tragstruktur befestigte Antriebseinrichtung zur Verschiebung des Spannbetätigungselementes auf oder parallel zu oder im Wesentlichen auf oder parallel zu der Längsachse der Tragstruktur umfasst.

Zweckmäßigerweise umfasst die Antriebseinrichtung der Spanneinrichtung in diesem Zusammenhang nach Anspruch 11 wenigstens eine manuell, elektromotorisch, mechanisch, pneumatisch oder hydraulisch angetriebene und synchronisierte Linearachse zur Verschiebung des Spannbetätigungselementes auf oder parallel zu oder im Wesentlichen auf oder parallel zu der Längsachse der Tragstruktur.

Entsprechend Anspruch 12 sind die wenigstens zwei Spannelemente der Spanneinrichtung jeweils als eine Spannbacke ausgebildet. Die Anzahl von vorzusehenden Spannelementen bzw. Spannbacken richtet sich nach den individuellen technischen Anforderungen an die zwei Bauteile, deren Dimensionen und/oder Material, die jeweiligen Bearbeitungsverfahren und -abläufe etc. So kann die erfindungsgemäße Vorrichtung zum Beispiel mit nur zwei oder ebenso mit 160 und mehr Spannelementen bzw. Spannbacken ausgestattet sein.

Zur Verbesserung der Gleiteigenschaften und zur Reibungssowie Verschleißminderung können die Spannfläche/n zwischen den wenigstens zwei Spannelementen und dem Spannbetätigungselement und/oder die Gleitfläche/n zwischen der Tragstruktur oder dem Stützelement der Tragstruktur und dem Spannbetätigungselement nach Anspruch 13 in ganz bevorzugter Weise mit einer Beschichtung aus Kunststoff, insbesondere aus Polytetrafluorethylen (PTFE), Polyoximethylen (POM) oder Polyimid (PI), mit oder ohne Aramid-, Glas-; Kohlen-, Nylon-, Polyethylen- und/oder Polyesterfaserverstärkung, und/oder einer Kombination daraus versehen sein.

Vorteilhafterweise ist der Spanneinrichtung nach Anspruch 14 wenigstens eine Einrichtung zur Bearbeitung mindestens eines Teils der zwei segmentartig ausgebildeten, dünnwandigen und hohlprofilierten Bauteile zugeordnet.

Dabei liegt es bevorzugt im Rahmen der Erfindung, die wenigstens eine Einrichtung zur Bearbeitung des mindestens einen Teils der zwei segmentartig ausgebildeten, dünnwandigen und hohlprofilierten Bauteile nach Anspruch 15 als Schweiß-, Löt-oder Klebeeinrichtung, Schneideeinrichtung, Schleif-, Fräs-, Dreh- oder dergleichen flächen- und spanbearbeitende sowie güte- und materialprüfende Einrichtung auszubilden. Die Schweißeinrichtung kann auf Wolfram-Inertgas (WIG)-, Metall-Inertgas (MIG)-, Rührreib (FSW)-, Elektronenstrahl (EB)-, Laser-, Plasmaschweißen oder jedem anderen geeigneten Schweißverfahren basieren. Ganz bevorzugt für die erfindungsgemäße Vorrichtung eignet sich eine Schweißeinrichtung auf Basis von Rührreib (FSW)-Schweißen und/oder Wolfram-Inertgas (WIG)-Schweißen.

Schließlich sorgen die Merkmale nach Anspruch 16 für eine Erhöhung der Genauigkeit beim Einspannen und Ausrichten der zwei Bauteile zueinander und damit einer Verbesserung der Herstellungsgenauigkeit insgesamt. Demnach ist erfindungsgemäß noch vorgesehen, dass die Spanneinrichtung an der Tragstruktur gegenüber der wenigstens einen Einrichtung zur Bearbeitung der zwei segmentartig ausgebildeten, dünnwandigen und hohlprofilierten Bauteile relativ drehbar, insbesondere um die Längsachse der Tragstruktur, und/oder verschwenkbar, insbesondere um eine horizontale Drehachse, angeordnet ist. Insbesondere die relative Verschwenkbarkeit ermöglicht es, jede Schweißnaht in der jeweils optimalen Lage erzeugen, indem die flüssige Schweißschmelze in optimale/r Lage, nämlich in sogenannte/r Wannenlage zur Erdanziehung, ausgerichtet und erzeugt wird.

Diese Aufgabe wird schließlich noch in verwendungsmäßiger Hinsicht durch die Merkmale der Ansprüche 17 bis 20 gelöst.

Nach Anspruch 17 ist die erfindungsgemäße Vorrichtung vorzugsweise zum Einspannen, insbesondere in Umfangsrichtung spannungsfreien Einspannen, zur Montage von segmentartig ausgebildeten, dünnwandigen und hohlzylindrischen Bauteilen und Behältern, Domen sowie Boostergehäusen von Raketen oder ähnlichen hohlzylindrischen Geräten großer Abmessungen vorgesehen. Alternativ oder kumulativ dazu kann die erfindungsgemäße Vorrichtung nach Anspruch 18 dem Bearbeiten, insbesondere dem Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen und Behältern, Domen sowie Boostergehäusen oder ähnlichen hohlzylindrischen Geräten großer Abmessungen dienen.

Schließlich liegt es noch im Rahmen der Erfindung, die erfindungsgemäße Vorrichtung nach Anspruch 19 und 20 zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen zu verwenden. Ganz besonders eignet sich die erfindungsgemäße Vorrichtung dabei zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

Weitere Vorteile und Einzelheiten der Erfindung ergeben sich aus der nachfolgenden Beschreibung von bevorzugten Ausführungsformen der Erfindung sowie anhand der Zeichnungen. Hierbei zeigen:
- Fig. 1: eine schematische Seitenansicht eines aus segmentartig ausgebildeten, dünnwandigen und hohlprofilierten Bauteilen gefertigten Treibstofftanks,
- Fig. 2: eine Vorderansicht einer Ausführungsform einer erfindungsgemäß ausgebildeten Vorrichtung zum Einspannen und Ausrichten von segmentartig ausgebildeten, dünnwandigen und hohlprofilierten Bauteilen mit einer erfindungsgemäßen Spanneinrichtung, zusammen mit zwei Ausführungsformen einer Einrichtung zur Bearbeitung von zwei Bauteilen,
- Fig. 3: eine teilweise abgebrochene Schnittansicht der Ausführungsform der erfindungsgemäß ausgebildeten Vorrichtung nach der Fig. 2 entsprechend Ausschnitt III in der Fig. 2, in vergrößerter Darstellung,
- Fig. 4: eine teilweise abgebrochene Schnittansicht der Ausführungsform der erfindungsgemäß ausgebildeten Vorrichtung nach der Fig. 2 entsprechend Ausschnitt IV in der Fig. 3, in nochmals vergrößerter Darstellung,
- Fig. 5: eine teilweise abgebrochene Schnittansicht der Ausführungsform der erfindungsgemäß ausgebildeten Vorrichtung nach der Fig. 2 entsprechend Ausschnitt V in der Fig. 4 mit einer Ausführungsform einer Einrichtung zur Bearbeitung der zwei Bauteile, in nochmals vergrößerter Darstellung,
- Fig. 6: eine teilweise abgebrochene Schnittansicht der Ausführungsform der erfindungsgemäß ausgebildeten Vorrichtung entsprechend Ausschnitt VI in der Fig. 2 und entsprechend der Fig. 5 mit einer anderen Ausführungsform der Einrichtung zur Bearbeitung der zwei Bauteile, in vergrößerter Darstellung,
- Fig. 7: eine teilweise abgebrochene Schnittansicht der Ausführungsform der erfindungsgemäß ausgebildeten Vorrichtung nach der Fig. 2 entsprechend Ausschnitt VII in der Fig. 5, in nochmals vergrößerter Darstellung,
- Fig. 8A und 8B: zwei teilweise abgebrochene und schematische, perspektivische Ansichten der Ausführungsform der erfindungsgemäß ausgebildeten Spannelemente nach der Fig. 7,
- Fig. 9A: eine teilweise abgebrochene, schematische Schnittansicht der Ausführungsform eines erfindungsgemäß ausgebildeten Spannelementes nach der Fig. 7, in vergrößerter Darstellung,
- Fig. 9B bis 9D: Schnittansichten von weiteren Ausführungsformen von erfindungsgemäß ausgebildeten Spannelementen entsprechend der Fig. 9A, und
- Fig. 10A und 10B: Schnittansichten einer Ausführungsform von erfindungsgemäß ausgebildeten Spannbetätigungselementen.

Bei der nachfolgenden Beschreibung von Ausführungsbeispielen der erfindungsgemäßen Vorrichtung 10 zum Einspannen und Ausrichten von segmentartig ausgebildeten, dünnwandigen und hohlprofilierten Bauteilen 12 sind einander entsprechende, gleiche Bauteile jeweils mit identischen Bezugsziffern versehen.

Die Vorrichtung 10 nach der Erfindung ist zum Einspannen und Ausrichten von segmentartig ausgebildeten, dünnwandigen und hohlzylindrischen Bauteilen und Behältern, Domen sowie Boostergehäusen von Raketen oder ähnlichen hohlzylindrischen Geräten großer Abmessungen vorgesehen. Die Vorrichtung 10 zeichnet sich besonders durch ein in Umfangsrichtung spannungsfreies Einspannen aus, da die Spannung am bzw. über den Umfang im Bereich der gemeinsamen Trennebene von den Bauteilen gleich ist.

Die erfindungsgemäße Vorrichtung 10 eignet sich insbesondere zum Bearbeiten, insbesondere zum Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen und Behältern, Domen sowie Boostergehäusen oder ähnlichen hohlzylindrischen Geräten großer Abmessungen.

Darüber hinaus findet die erfindungsgemäße Vorrichtung 10 vorzugsweise zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen Verwendung.

In ganz bevorzugter Weise dient die erfindungsgemäße Vorrichtung 10 dem Herstellen von Bauteilen 12, wie etwa Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

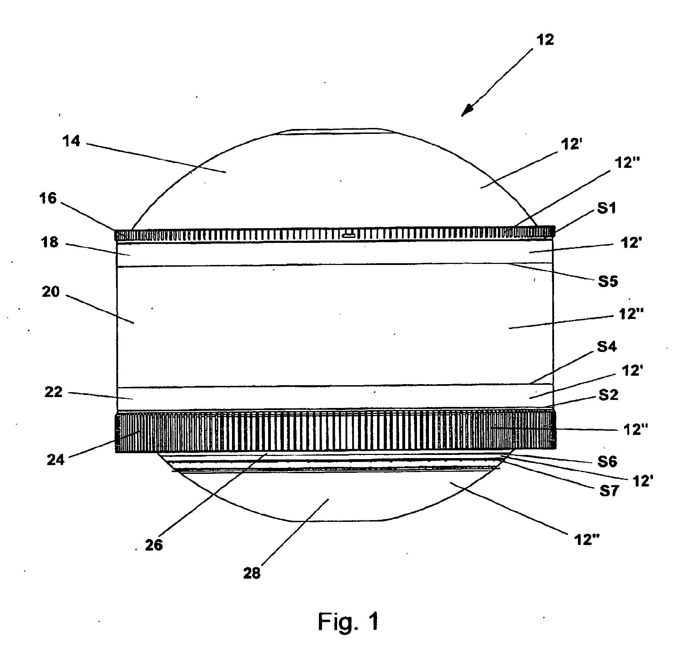

Ein solcher fertig hergestellter Behälter 12 ist in der Fig. 1 beispielhaft als ein Treibstofftank der Oberstufe der Ariane 5 dargestellt. Der Treibstofftank ist aus einer Vielzahl von segmentartig ausgebildeten, dünnwandigen und hohlprofilierten Bauteilen 12', 12'' zusammengesetzt, die sich in Form und Abmessung voneinander erheblich unterscheiden. Die Bauteile 12', 12'' sind jeweils zueinander benachbart. Entsprechend der Fig. 1 ist der Treibstofftank 12 aus einem Upper Bulkhead 14, einem Upper Skirt 16, einem Upper Y-Ring 18, einem Hohlzylinder 20, einem Lower Y-Ring 22, einem Elongated Lower Skirt 24, einem Inner Dome (nicht zu sehen) inklusive X-Ring 26 und einem LOX Dome bzw. Lower Bulkhead 28 gebildet. Die einzelnen einander benachbarten Bauteile 12', 12'' sind jeweils miteinander zu verschweißen. Dabei bilden die entsprechenden Schweißnähte S1, S2, S3, S4, S5, S6, S7 Verbindungsstellen zwischen jeweils zwei einander benachbarten Bauteilen 12', 12''. Einige dieser Schweißnähte können einfach, schnell und präzisionsgenau mittels der erfindungsgemäßen Vorrichtung 10 erzeugt werden.

Dies trifft zum Beispiel auf die Schweißnähte S1 oder S2 zu, um den Upper Bulkhead 14 mit dem Upper Skirt 16 bzw. den Elongated Lower Skirt 24 mit dem Lower Bulkhead 28 miteinander zu verschweißen, bei welchen es sich allesamt um im Wesentlichen zylindrische und damit für die Vorrichtung 10 vom Inneren bzw. in das Innere frei zugängliche Bauteile 12', 12'' handelt. Dies trifft gleichermaßen zum Beispiel auf die Schweißnaht S4 zu, um den Hohlzylinder 20 und den Lower Y-Ring 22 zu fügen. Aufgrund der vorhandenen Platzverhältnisse ist dabei ein Schweißen allerdings nur von außen möglich.

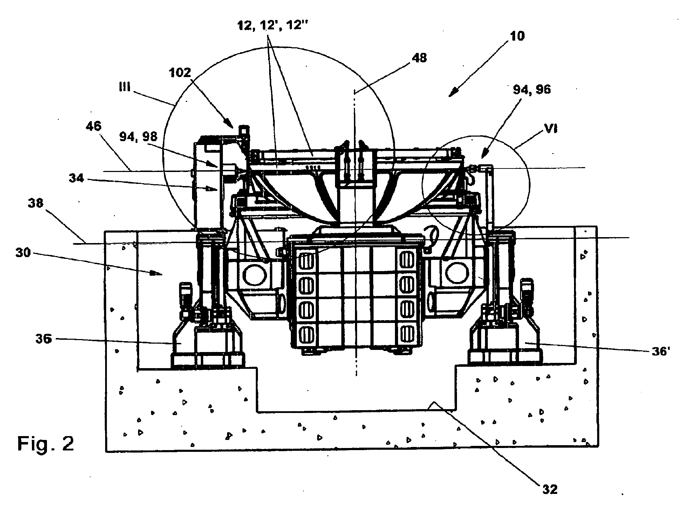

In den Fig. 2 bis 10B ist eine Ausführungsform der erfindungsgemäßen Vorrichtung 10 zum Einspannen und Ausrichten der segmentartig ausgebildeten, dünnwandigen und hohlprofilierten Bauteile 12', 12'' gezeigt.

Die erfindungsgemäße Vorrichtung 10 umfasst eine Tragstruktur 30 oder dergleichen Rahmengestell bzw. quasi Maschinentisch. Die Tragstruktur 30 ist auf oder an einer Basis 32 abgestützt. Bei der Basis 32 handelt es sich um ein Fundament, einen (Fundament-)Boden eines Gebäudes oder eine sonstige Grundkonsole.

Des Weiteren umfasst die erfindungsgemäße Vorrichtung 10 eine Einrichtung 34 zum Einspannen des Behälters 12 und/oder der zwei segmentartig ausgebildeten, dünnwandigen und hohlprofilierten Bauteile 12', 12''. Die Spanneinrichtung 34 ist von der Tragstruktur 30, wie aus der Fig. 2 ersichtlich ist, aufgenommen und gehalten.

Die Tragstruktur 30 umfasst, wie die Fig. 2 zeigt, zwei Tragelemente 36, 36'. Die zwei Tragelemente 36, 36' stützen sich auf oder an der Basis 32 oder dergleichen Fundament ab und sind auf bzw. an der Basis 32 einander gegenüberliegend, zum Beispiel mittels Schrauben etc. (nicht dargestellt), in herkömmlicher Weise befestigbar. Entsprechend der Fig. 2 ist die Spanneinrichtung 34 von der Tragstruktur 30 zwischen deren zwei Tragelementen 36, 36' mittig aufgenommen und, vorzugsweise dreh- bzw. verschwenkbar, zum Beispiel über eine im Wesentlichen horizontal verlaufende Drehachse 38, gehalten.

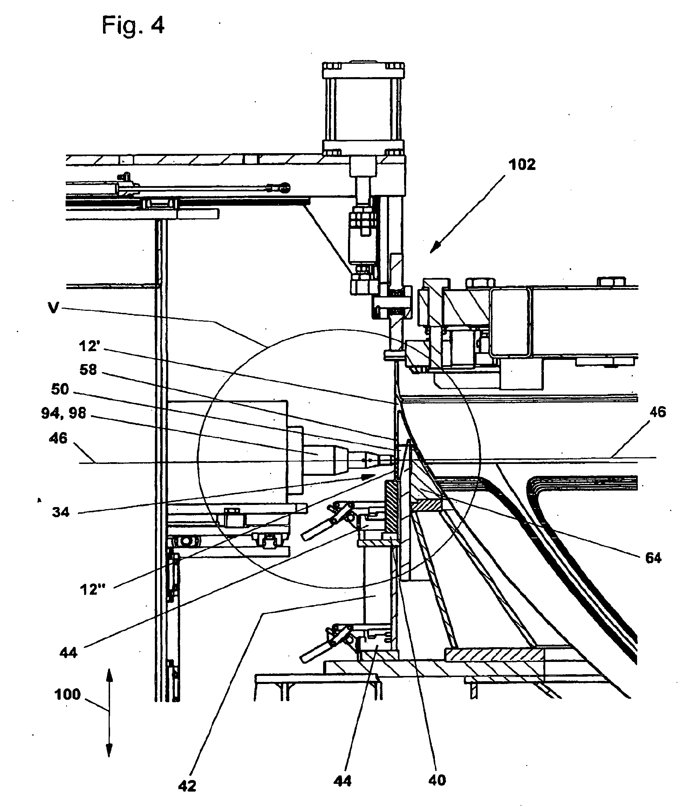

Die Spanneinrichtung 34 weist, wie den Fig. 4 bis 6 entnehmbar ist, einen Tisch 40 oder Sockel, auf dem die zwei Bauteile 12', 12" gegebenenfalls unter Zwischenanordnung eines Adapterelementes 42 zu deren Höheneinstellung zu positionieren sind, und eine Vielzahl von Zentrierelementen (nicht gezeigt) und Klammerelementen 44 auf. Mittels der Zentrierelemente und der Klammerelemente 44 werden die zwei auf dem Tisch 40 oder Sockel positionierten Bauteile 12', 12'' sodann ausgerichtet und lösbar festgelegt bzw. gehalten.

Weiter ist die Spanneinrichtung 34 derart ausgebildet, dass die zwei Bauteile 12', 12'' im Bereich von deren gemeinsamer Trennebene 46 von der Spanneinrichtung 34 senkrecht oder im Wesentlichen senkrecht zu der Längsachse 48 der Tragstruktur 30, die gleichzeitig die Längsachse der Vorrichtung 10 ist, und radial von innen nach außen beaufschlagbar sind. Darüber hinaus weist die Spanneinrichtung 34 wenigstens zwei Spannelemente 50 mit Spannflächen 52, welche die zwei Bauteile 12', 12'' beaufschlagen, auf. Die wenigstens zwei Spannelemente 50 sind in einer gemeinsamen Ebene angeordnet und radial von innen nach außen, und umgekehrt, verschiebbar.

Eine Ausführungsform der erfindungsgemäßen Vorrichtung 10 ist anhand der Fig. 2 bis 10B näher erläutert. Der Spanneinrichtung 34 sind die wenigstens zwei Spannelemente 50 zugeordnet. Die wenigstens zwei Spannelemente 50 der Spanneinrichtung 34 sind dabei vorzugsweise als einzelne Spannbacken ausgebildet.

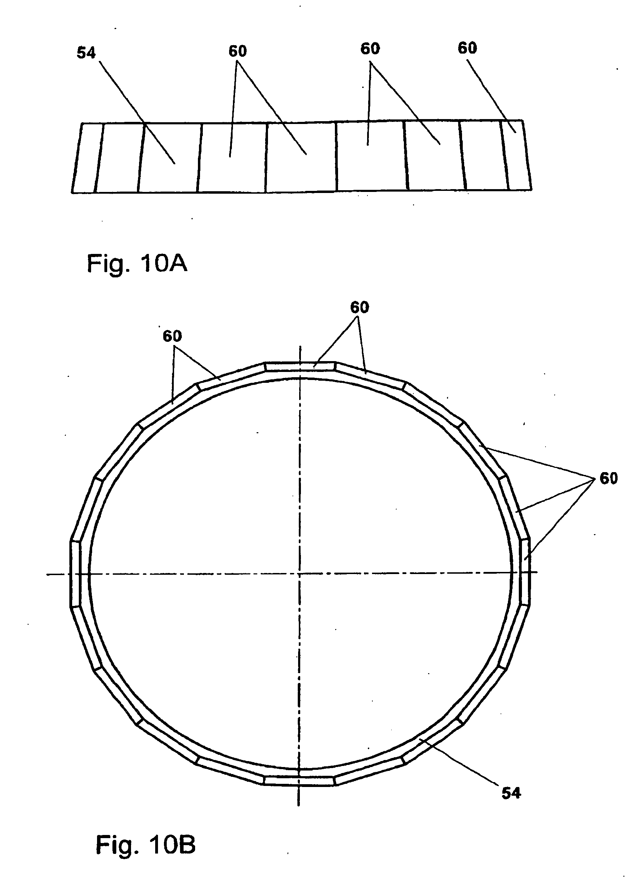

Die Anzahl der Spannelemente 50 bzw. Spannbacken richtet sich nach den individuellen technischen Anforderungen an die zwei Bauteile 12', 12'', deren Abmessungen und/oder Material, die jeweiligen Bearbeitungsverfahren und -abläufe etc. So kann die erfindungsgemäße Vorrichtung 10 zum Beispiel mit nur zwei Spannelementen 50 bzw. Spannbacken ausgestattet sein. Bei der Ausführungsform der Vorrichtung 10, die in den Fig. 2 bis 6 gezeigt ist, sind hingegen insgesamt 160 Spannelemente 50 bzw. Spannbacken vorgesehen. Ohne im Einzelnen dargestellt oder beschrieben zu sein, kann die Anzahl der Spannelemente 50 allerdings ebenso noch größer oder aber kleiner sein. Bei der Ausführungsform entsprechend den Fig. 10A und 10B wiederum sind letztlich 20 Spannelemente 50 (nicht gezeigt) vorgesehen.

Die Spanneinrichtung 34 umfasst zudem vorteilhafterweise ein Spannbetätigungselement 54, das die wenigstens zwei Spannelemente 50 gemeinsam beaufschlagt bzw. auf die Spannelemente 50 gleichzeitig und in gleichem Ausmaß einwirkt, d.h. die Spannelemente 50 sämtlich radial nach außen in Richtung der zwei Bauteile 12', 12'' verschiebt bzw. drückt oder sämtlich radial nach innen in Richtung der Längsachse 48 der Tragstruktur 30 bzw. der Vorrichtung 10 und damit von den Bauteilen 12', 12'' weg zurückzieht. Auf diese Weise lässt sich eine besonders einfache, zudem kompakte und stabile bauliche Ausgestaltung der Vorrichtung 10 erhalten. Zugleich ist eine optimale Raumaufteilung, Raumausnutzung und damit Platzseinsparung durch nur ein einziges Spannbetätigungselement 54 ermöglicht.

Das Spannbetätigungselement 54 der Spanneinrichtung 34 ist ringförmig ausgebildet. Vorzugsweise ist das Spannbetätigungselement 54 keilringförmig bzw. als Keilring ausgestaltet. Das Spannbetätigungselement 54 kann dabei entweder einteilig oder segmentartig geteilt sein. In letzterer Ausgestaltung ist bevorzugt, die einzelnen Segmente des Spannbetätigungselementes 54 über den Umfang gleichgroß auszubilden.

Das Spannbetätigungselement 54 ist weiterhin an der Tragstruktur 30 der Vorrichtung 10 derart angeordnet, dass die Spannelemente 50 durch dessen Verschiebung auf oder parallel zu oder im Wesentlichen auf oder parallel zu der Längsachse 48 der Tragstruktur 30 radial von innen nach außen, und umgekehrt, beaufschlagt werden. Hierdurch ist ein Einspannen und Ausrichten der zwei Bauteile 12', 12'' von beliebiger Form im Bereich von deren gemeinsamer Trennebene 46 ermöglicht.

So können zwei Bauteile von etwa im Wesentlichen zylindrischer Form, die beide von außen frei oder zumindest weitgehend frei zugänglich sind (nicht gezeigt), radial von innen nach außen beaufschlagt werden. Dabei sind die zwei Bauteile 12', 12'' jeweils durch die Spanneinrichtung 34 von außen frei zugänglich. Dies ist bei zwei Bauteilen 12', 12'' von zylindrischer Form der Fall, wobei die Spanneinrichtung 34 insoweit auf die Innenflächen 56 der beiden Bauteile 12', 12'' selbst einwirkt. Dabei werden die zwei Bauteile 12', 12'' üblicherweise von oben an die Spanneinrichtung 34 heranbewegt und über/auf die Spanneinrichtung 34 (auf-)gesetzt. Alternativ oder kumulativ dazu kann es, ohne im Einzelnen dargestellt zu sein, jedoch ebenso möglich und gleichermaßen von Vorteil sein, dass die Spanneinrichtung 34 in Längsrichtung der Tragstruktur 30 in die zwei Bauteile 12', 12'' hineinbewegbar ist.

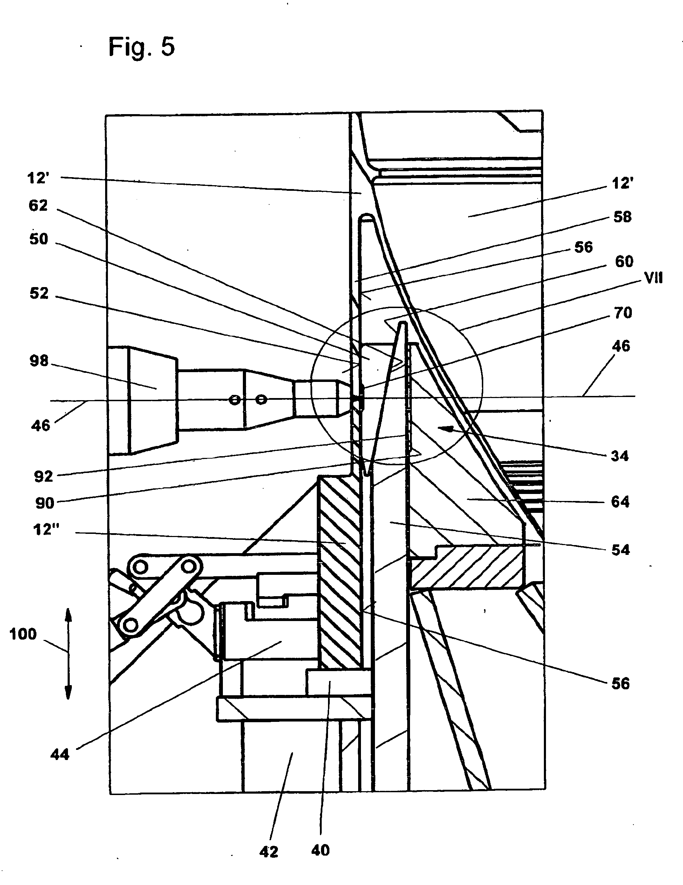

Dies ist aber ebenso bei einem Bauteil 12' von teilweise oder vollständig geschlossener Form mit einem freikragenden Bauteilelement 58, an das ein Bauteil 12'' von zylindrischer Form anzuformen ist, der Fall (vgl. Fig. 5). Dabei ist die Spanneinrichtung 34 in Längsrichtung der Tragstruktur 30, d.h. parallel zu deren Längsachse 48, in das freikragende Bauteilelement 58 des Bauteiles 12' und das Bauteil 12'' von zylindrischer Form hineinbewegbar ist. Die Spanneinrichtung 34 wirkt damit auf die Innenfläche 56 des freikragenden Bauteilelementes 58 des einen Bauteiles 12' und auf die Innenfläche 56 des anderen Bauteiles 12'' ein.

Wie aus den Fig. 5 bis 7 hervorgeht, umfasst das Spannbetätigungselement 54 der Spanneinrichtung 34 wenigstens eine Schrägfläche 60, welche der Längsachse 48 der Tragstruktur 30 abgewandt ist. Die Spannelemente 50 besitzen zugleich jeweils eine Schrägfläche 62, welche der Längsachse 48 der Tragstruktur 30 zugewandt ist. Die Schrägflächen 60, 62 von Spannbetätigungselement 54 und Spannelementen 50 sind einander entsprechend ausgebildet und stehen in gegenseitigem Kontakt und Eingriff, derart, dass die Spannelemente 50 durch Verschiebung des Spannbetätigungselementes 54 im Wesentlichen auf oder parallel zu oder im Wesentlichen auf oder parallel zu der Längsachse 48 der Tragstruktur 30 radial von innen nach außen, und umgekehrt, verschiebbar sind.

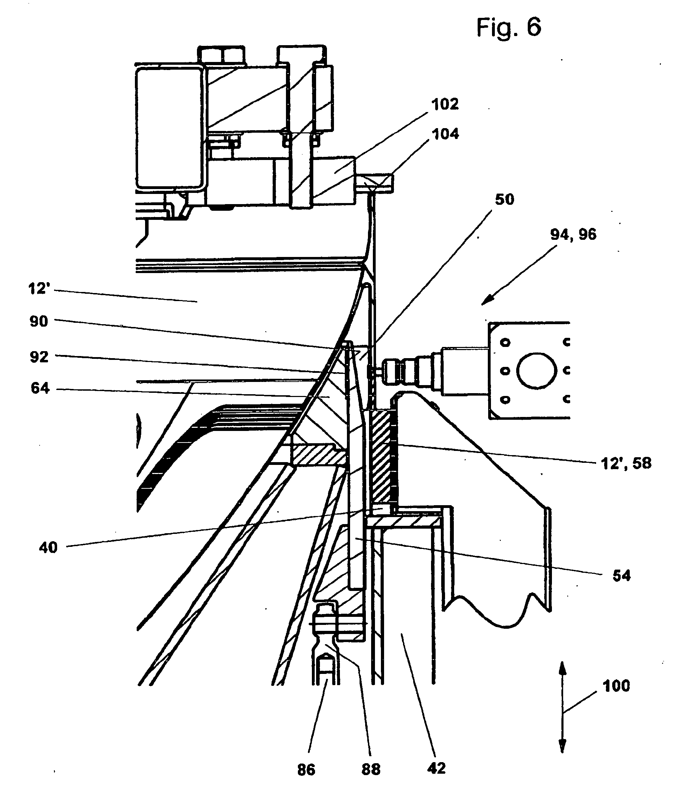

Das Spannbetätigungselement 54 der Spanneinrichtung 34 ist erfindungsgemäß, wie bei der Ausführungsform der Vorrichtung 10 in den Fig. 5 und 6 dargestellt, mittelbar über ein, insbesondere feststehendes, Stützelement 64 der Tragstruktur 30 radial nach innen abstützbar. Das Stützelement 64 ist insbesondere in Form eines einteiligen oder mehrteiligen Stützringes ausgestaltet.

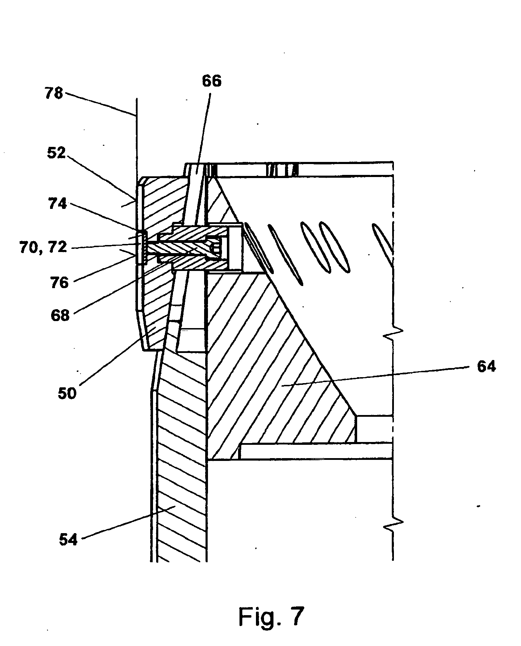

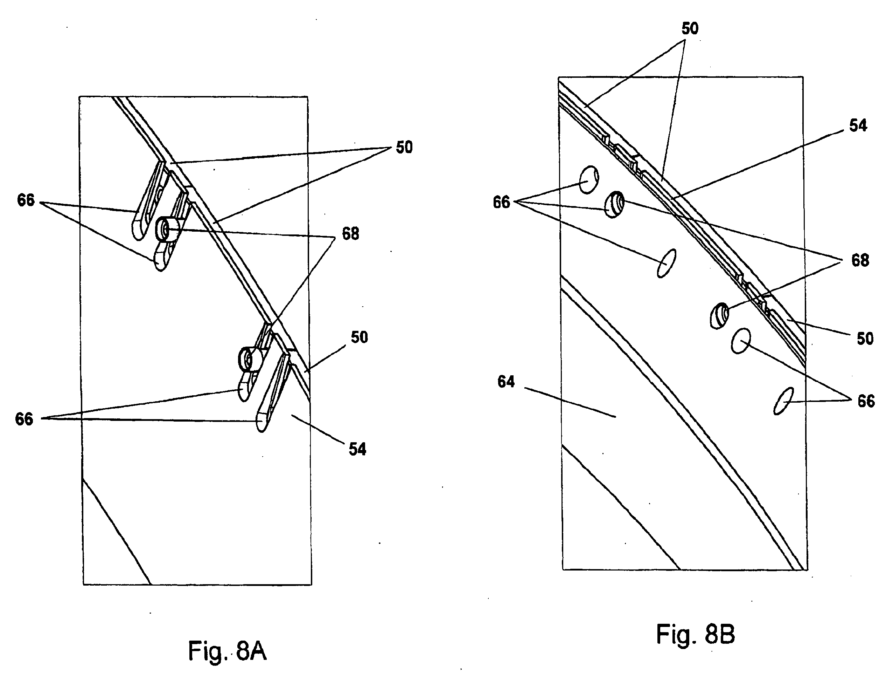

Das Spannbetätigungselement 54 ist, wie die Fig. 7, 8A und 8B zeigen, weiter mit Langlöchern 66 versehen. Die Langlöcher 66 sind für Führungselemente 68 vorgesehen. Die Langlöcher 66 erstrecken sich vorzugsweise parallel zu der Längsachse 48 der Tragstruktur 30. Die Führungselemente 68, die einer Aufnahme und Führung der Spannelemente 50 dienen, wiederum sind an der Tragstruktur 30 bzw. an dem Stützelement 64 der Tragstruktur 30 befestigt. Die Führungselemente 68 verlaufen vorzugsweise senkrecht zu der Längsachse 48 der Tragstruktur 30. Insbesondere sind die Führungselemente 68 als Bolzen ausgebildet. Die in den Langlöchern 66 aufgenommenen Führungselemente 68 sind anhand der Fig. 8A und 8B ohne bzw. mit Stützelement 64 der Tragstruktur 30 im Detail dargestellt.

Wie den Fig. 5 bis 7 und 9A bis 9D auch entnommen werden kann, umfasst die Spanneinrichtung 34 bei dem dargestellten Ausführungsbeispiel erfindungsgemäß weiterhin in ganz bevorzugter Weise einen Wurzelstützring 70 oder alternativ einen Badsicherungsring 72, der den Spannelementen 50 an den Spannflächen 52, welche die zwei Bauteile 12', 12'' beaufschlagen, zugeordnet ist. Während ein Wurzelstützring 70 besonders gut für Rührreib (FSW)-Schweißen geeignet ist, bei dem große Druckbelastungen auftreten, kommt ein Badsicherungsring 72 vorteilhafterweise zum Beispiel beim Wolfram-Inertgas (WIG)-Schweißen oder einem sonstigen Schweißverfahren zum Einsatz, bei dem keine derart großen Druckbelastungen wie beim Rührreib (FSW)-Schweißen auftreten. Der Wurzelstützring 70 bzw. der Badsicherungsring 72 ist insbesondere aus einem hochwarmfesten Material ausgebildet.

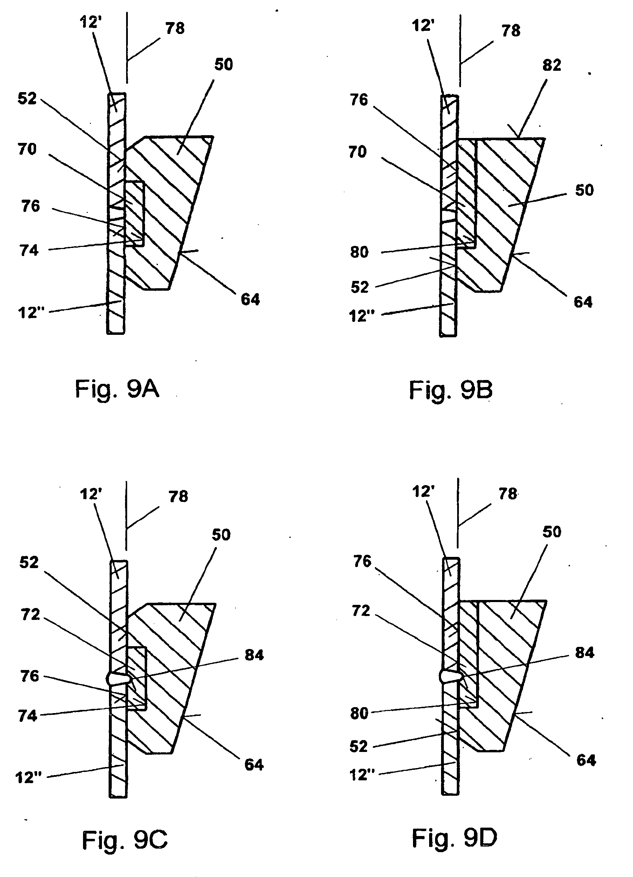

In der Fig. 9A ist eine Ausführungsform des Wurzelstützringes 70 der Fig. 5 bis 7 vergrößert dargestellt. Der Wurzelstützring 70 ist von einer Nut 74, die in den Spannelementen 50 vorgesehen ist, aufgenommen, und zwar derart, dass die Oberfläche 76 des Wurzelstützringes 70, welche den zwei Bauteilen 12', 12'' zugewandt ist, und die Spannflächen 52, welche die zwei Bauteile 12', 12'' beaufschlagen, zueinander in einer Ebene 78 fluchten.

In alternativer Ausgestaltung ist in der Fig. 9B eine andere erfindungsgemäße Ausführungsform eines Wurzelstützringes 70 gezeigt. Anstelle der Nut 74 ist dabei eine Ausnehmung 80 vorgesehen, in welcher der Wurzelstützring 70 angeordnet ist. Die Ausnehmung 80 erstreckt sich bis zu einer - hier oberen - Seitenfläche 82 des Spannelementes 50, wodurch sich der Wurzelstützring 70 in dem Spannelement 50 besonders einfach montieren bzw. von dem Spannelement 50 zu Wartungs-, Reparatur- oder sonstigen Auswechselzwecken demontieren lässt.

In der Fig. 9C ist eine Ausführungsform eines erfindungsgemäßen Badsicherungsringes 72 dargestellt, die mit der Ausführungsform des Wurzelstützringes 70 in der Fig. 9A vergleichbar ist. Der Badsicherungsring 72 ist in eine Nut 74, die in den Spannelementen 50 vorgesehen ist, eingebracht. Die Oberfläche 76 des Badsicherungsringes 72, welche den zwei Bauteilen 12', 12'' zugewandt ist, und die Spannflächen 52, welche die zwei Bauteile 12', 12'' beaufschlagen, fluchten zueinander in der Ebene 78.

Der Badsicherungsring 72 selbst ist mit einer Ausnehmung 84 oder dergleichen Nut versehen, die sich von der Oberfläche 76 in den Badsicherungsring 72 hineinerstreckt. Die Ausnehmung 84 dient einer wenigstens teilweisen Aufnahme von Schweißmaterial im Schweißbereich bzw. der Schweißnaht der gemeinsamen Trennebene 46 der zwei Bauteile 12', 12''. Die Ausnehmung 84 kann von unterschiedlichster Form und Abmessung sein, die sich jeweils in Abhängigkeit von der Form und Abmessung der Schweißnaht, der jeweiligen Schweißparameter, etc., bestimmt.

In wiederum alternativer Ausgestaltung ist in der Fig. 9D eine andere erfindungsgemäße Ausführungsform des Badsicherungsringes 72 gezeigt, die mit der Ausführungsform des Wurzelstützringes 70 in der Fig. 9B vergleichbar ist. Anstelle der Nut 74 ist ebenfalls eine Ausnehmung 80 vorgesehen, in welcher der Badsicherungsring 72 angeordnet ist. Die Ausnehmung 80 erstreckt sich wiederum bis zu der oberen Seitenfläche 82 des Spannelementes 50, was die Montage bzw. Demontage des Badsicherungsringes 72 in dem Spannelement 50 bzw. von dem Spannelement 50 zu Wartungs-, Reparatur- oder sonstigen Austauschzwecken besonders vereinfacht.

Von besonderem Vorteil ist es, den Wurzelstützring 70 und den Badsicherungsring 72 einander korrespondierend, d.h. aufeinander in Form und Abmessung abgestimmt, auszubilden. Wie sich den Fig. 9A bis 9D entnehmen lässt, ist es auf diese Weise möglich, den Wurzelstützring 70 und den Badsicherungsring 72 in Abhängigkeit des anzuwendenden Schweißverfahrens miteinander auswechseln. Die erfindungsgemäße Vorrichtung 10 ist dadurch ausgesprochen vielseitig für unterschiedlichste Schweißverfahren einsetzbar.

Entsprechend der Fig. 6 umfasst die Spanneinrichtung 34 weiterhin eine Antriebseinrichtung 86 zur Verschiebung des Spannbetätigungselementes 54 auf oder parallel zu oder im Wesentlichen auf oder parallel zu der Längsachse 48 der Tragstruktur 30. Die Antriebseinrichtung 86 ist an der Tragstruktur 30 befestigt und von dieser abgestützt. Die Antriebseinrichtung 86 weist wenigstens eine manuell, elektromotorisch, mechanisch, pneumatisch oder hydraulisch angetriebene und synchronisierte Linearachse 88 auf, welche zur Verschiebung des Spannbetätigungselementes 54 vorgesehen ist.

Wie in den Fig. 5 und 6 schematisch des Weiteren angedeutet ist, ist/sind die Gleitfläche/n 90 zwischen der Tragstruktur 30 oder dem Stützelement 64 der Tragstruktur 30 und dem Spannbetätigungselement 54 zur Verbesserung der Gleiteigenschaften und zur Reibungs- und Verschleißminderung mit einer Beschichtung 92 versehen. Die Beschichtung 92 besteht aus Kunststoff, insbesondere aus Polytetrafluorethylen (PTFE), Polyoximethylen (POM) oder Polyimid (PI), mit oder ohne Aramid-, Glas-, Kohlen-, Nylon-, Polyethylen- und/oder Polyesterfaserverstärkung, und/oder einer Kombination daraus. Die Beschichtung 92 kann aufgesprüht, aufgeklebt oder in beliebiger sonstiger Weise auf der Tragstruktur 30, dem Stützelement 64 und dem Spannbetätigungselement 54 aufgetragen sein. Ohne im Einzelnen näher dargestellt zu sein, kann eine solche Beschichtung 92 in gleicher Weise auch auf die Spannfläche/n 52 zwischen den Spannelementen 50 und dem Spannbetätigungselement 54 aufgebracht sein.

Aus den Fig. 2 bis 6 geht darüber hinaus hervor, dass der Spanneinrichtung 34 wenigstens eine Einrichtung 94 zur Bearbeitung mindestens eines Teils der zwei segmentartig ausgebildeten, dünnwandigen und hohlprofilierten Bauteile 12', 12'' etwa in einem Bereich der gemeinsamen Trennebene 46 und einem dazu benachbarten Bereich zugeordnet ist. Die Bearbeitungseinrichtung 94 kann in diesem Zusammenhang als Schweiß-, Löt-oder Klebeeinrichtung bzw. Schneideeinrichtung bzw. Schleif-, Fräs-, Dreh- oder dergleichen flächen- und spanbearbeitende sowie güte- und materialprüfende Einrichtung ausgebildet sein.

Bei der Ausführungsform der erfindungsgemäßen Vorrichtung 10 sind zwei Bearbeitungseinrichtungen 94 vorgesehen, nämlich zum einen eine Fräseinrichtung 96 und zum anderen eine Schweißeinrichtung 98, vorzugsweise zum Rührreib (FSW)-Schweißen oder Wolfram-Inertgas (WIG)-Schweißen. Die Schweißeinrichtung 98 kann gleichsam auf Metall-Inertgas (MIG)-, Elektronenstrahl (EB)-, Laser-, Plasmaschweißen oder jedem anderen geeigneten Schweißverfahren basieren.

Die zwei Fräs- und Schweißeinrichtungen 96, 98 sind entsprechend der Fig. 2 zueinander über den Umfang der Tragstruktur 30 um 180° verteilt angeordnet. Ohne im Einzelnen dargestellt zu sein, ist es dagegen ebenso möglich, die zwei Fräs- und Schweißeinrichtungen 96, 98 unmittelbar benachbart zueinander anzuordnen, um zum Beispiel die Bearbeitungsabläufe noch weiter zu optimieren.

Weiterhin ist es auch denkbar, alternativ oder kumulativ zu der Fräseinrichtung 96 eine Bearbeitungseinrichtung 94 in Form einer oder mehrerer Gegendruckrolle/n oder dergleichen vorzusehen, um auftretende radiale Belastungen, insbesondere (Druck-)Kräfte und -Momente, welche durch eine auf Rührreib (FSW)-Schweißen basierende Schweißeinrichtung 98 erzeugt werden, zu kompensieren. Die Gegendruckrolle/n würde/n dann im Bereich der Fräseinrichtung 96 und/oder dazu seitlich benachbart über den Umfang der Tragstruktur 30, insbesondere symmetrisch, verteilt angeordnet sein, um den Behälter 12 bzw. die Bauteile 12', 12'' außenseitig abzustützen. Auf diese Weise lassen sich radiale Druckbelastungen von 4 bis 5 t und mehr durch das Rührreib (FSW)-Schweißwerkzeug abfangen und Beschädigungen an dem Behälter 12 bzw_{.} den Bauteilen 12', 12'' und der Tragstruktur 30 vermeiden.

Die Bearbeitungseinrichtung 94 ist gegenüber der Tragstruktur 30 und der Spanneinrichtung 34 der Vorrichtung 10 nach der Erfindung relativ entsprechend Doppelpfeil 100 in vertikaler Richtung verstellbar, so dass jede nur erdenkliche Position gegenüber dem/den zu bearbeitenden Bauteil/en 12', 12'' eingenommen und angefahren sowie erreicht werden kann.

Ohne im Einzelnen dargestellt zu sein, kann die Spanneinrichtung 34 an der Tragstruktur 30 gegenüber der Bearbeitungseinrichtung 94 zur Bearbeitung der zwei segmentartig ausgebildeten, dünnwandigen und hohlprofilierten Bauteile 12', 12'' relativ drehbar und/oder verschwenkbar angeordnet sein, etwa um die Längsachse 42 der Tragstruktur 30 bzw. die Drehachse 38 der Tragelemente 36, 36'. Durch die relative Verdrehbarkeit ist eine zeitgleiche, kontinuierliche Bearbeitung der eingespannten und ausgerichteten Bauteile 12', 12'', zum Beispiel ein Fräsen der Schweiß- und Nahtstelle zur Vorbereitung des nachfolgenden Schweißens, ermöglicht, wodurch die Güte der Verbindung zwischen den beiden Bauteilen 12', 12'' erheblich verbessert wird. Alternativ oder kumulativ ist es dabei ohne weiteres möglich, die Spanneinrichtung 34 und/oder die Bearbeitungseinrichtung 84 drehbar auszubilden. Durch die relative Verschwenkbarkeit ist es zudem möglich, jede Schweißnaht in der jeweils optimalen Lage erzeugen, indem die flüssige Schweißschmelze in optimale/r Lage, nämlich in sogenannte/r Wannenlage zur Erdanziehung, ausgerichtet und erzeugt wird.

Bei der in den Fig. 2 bis 6 dargestellten Ausführungsform der Vorrichtung 10 nach der Erfindung sind zusätzlich konstruktive Maßnahmen verwirklicht, um die zwei Bauteile 12', 12'' parallel zu der Längsachse 48 der Tragstruktur 30 mit einem Druck zu beaufschlagen und damit in ständigen Kontakt zueinander zu bringen und zu halten. Insbesondere beim Werkzeugeingriff durch die wenigstens eine Bearbeitungseinrichtung 94 ist es aus Gründen einer hohen Fertigungsgenauigkeit erforderlich, dass die zwei Bauteile 12', 12'' im Bereich von deren gemeinsamer Trennebene 46 ohne jedes Spiel an einander zur gegenseitigen Anlage kommen und während der Bearbeitung unter Druck in ständigem Kontakt bleiben.

Zu diesem Zweck ist bei dem dargestellten Ausführungsbeispiel eine Druckrolleneinrichtung 102 vorgeschlagen, die unmittelbar oberhalb der Bearbeitungseinrichtung 94 angeordnet ist. Die Druckrolleneinrichtung 102 bringt über eine Druckrolle (nicht näher gezeigt) einen gleichbleibenden Druck auf den stirnseitigen Rand 104 des oberen Bauteiles 12' und somit gleichzeitig auf das untere Bauteil 12'' auf und hält somit die beiden Bauteile 12', 12'' in ständiger Berührung zueinander. Üblicherweise sind die Bearbeitungseinrichtung 98 und die Druckrolleneinrichtung 106 gegenüber der Tragstruktur 30 feststehend angeordnet. Sofern die Bearbeitungseinrichtung 94 gegenüber zum Beispiel der Tragstruktur 30 während der Bearbeitung eine relative Drehung ausführt, folgt jedoch auch die Druckrolleneinrichtung 102 dieser Drehung entsprechend.

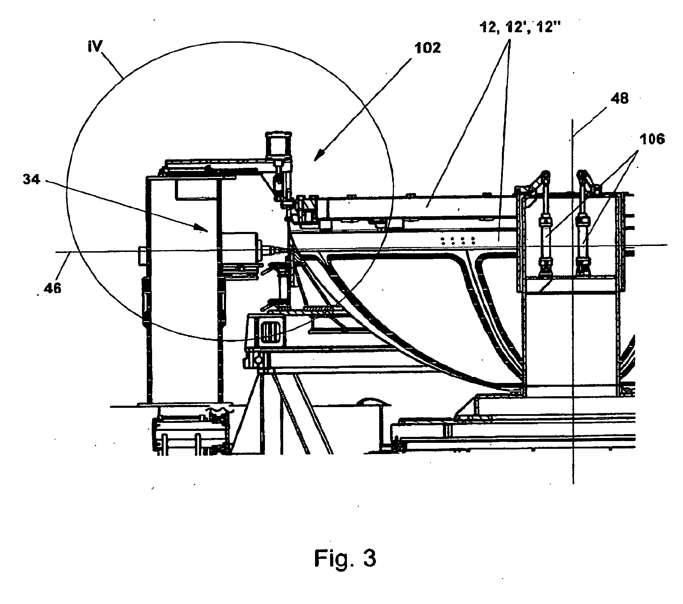

Entsprechend den Fig. 2 und 3 können zur Unterstützung dessen Druckzylinder 106 oder Gewichte, zum Beispiel in Form von Gewichtsringen, vorgesehen sein, welche auch einen gleichbleibenden axialen Druck auf den stirnseitigen Rand 104 des oberen Bauteiles 12' ausüben, um das obere Bauteil 12' auf dem unteren Bauteil 12'' nicht nur im Bereich der Bearbeitungseinrichtung 94, sondern gleichmäßig über den gesamten Umfang zu halten.

wie aus den Fig. 10A und 10B ersichtlich ist, kann das Spannbetätigungselement 54 der Spanneinrichtung 34 in Abänderung der bisher dargestellten Ausführungsform anstelle einer einzigen Schrägfläche 60 ebenso mit einer Vielzahl von Schrägflächen 60 ausgestaltet sein. Bei der dargestellten Ausführungsform sind insgesamt 20 Schrägflächen 60 vorgesehen. Jede dieser Schrägflächen 60, die der Längsachse 48 der Tragstruktur 30 abgewandt sind, ist dabei planar ausgebildet. Auf diese Weise lassen sich gleichermaßen einfach wie wirksam Verspannungen zwischen den Spannelementen 50 und dem Spannbetätigungselementen 54, eventuell durch Verkanten der Führungselemente 66 verursacht etc., und eine daraus resultierende Schwergängigkeit auszuschließen.

## Patentansprüche

1. Vorrichtung zum Einspannen und Ausrichten von segmentartig ausgebildeten, dünnwandigen und hohlprofilierten Bauteilen (12', 12''), umfassend eine auf oder an einer Basis (32) abgestützte Tragstruktur (30) oder dergleichen Rahmengestell und eine von der Tragstruktur (30) aufgenommene und gehaltene Einrichtung (34) zum Einspannen von zwei segmentartig ausgebildeten, dünnwandigen und hohlprofilierten Bauteilen (12', 12''), wobei die Spanneinrichtung (34) derart ausgebildet ist, dass die zwei Bauteile (12', 12'') im Bereich von deren gemeinsamer Trennebene (46) von der Spanneinrichtung (34) senkrecht zu der Längsachse (48) der Tragstruktur (30) und radial von innen nach außen beaufschlagbar sind, und wenigstens zwei in einer gemeinsamen Ebene angeordnete und radial von innen nach außen, und umgekehrt, verschiebbare Spannelemente (50) mit die zwei Bauteile (12', 12'') beaufschlagenden Spannflächen (52) aufweist, **dadurch gekennzeichnet, dass** die Spanneinrichtung (34) die wenigstens zwei Spannelemente (50) und ein die wenigstens zwei Spannelemente (50) gemeinsam beaufschlagendes Spannbetätigungselement (54) umfasst, wobei das Spannbetätigungselement (54) der Spanneinrichtung (34) keilringförmig oder als ein, insbesondere einteiliger oder segmentartig geteilter, Keilring ausgebildet ist und die wenigstens zwei Spannelemente (50) durch Verschiebung auf oder parallel zu oder im Wesentlichen auf oder parallel zu der Längsachse (48) der Tragstruktur (30) radial von innen nach außen beaufschlagt, wobei das Spannbetätigungselement (54) der Spanneinrichtung (34) an einem Stützelement (64) in Form eines Stützringes radial nach innen abstützbar ist.

2. Vorrichtung nach Anspruch 1, **dadurch gekennzeichnet, dass** das Spannbetätigungselement (54) der Spanneinrichtung (34) wenigstens eine der Längsachse (48) der Tragstruktur (30) abgewandte Schrägfläche (60) umfasst, die mit der Längsachse (48) der Tragstruktur (30) zugewandten, entsprechend ausgebildeten Schrägflächen (62) der wenigstens zwei Spannelemente (50) in Eingriff steht, derart, dass die wenigstens zwei Spannelemente (50) durch Verschiebung des Spannbetätigungselementes (54) auf oder parallel zu oder im Wesentlichen auf oder parallel zu der Längsachse (48) der Tragstruktur (30) radial von innen nach außen, und umgekehrt, verschiebbar sind.

3. Vorrichtung nach Anspruch 1 oder 2, **dadurch gekennzeichnet, dass** das Spannbetätigungselement (54) der Spanneinrichtung (34) eine Vielzahl von Schrägflächen (60), die der Längsachse (48) der Tragstruktur (30) abgewandt und jeweils planar ausgebildet sind, umfasst.

4. Vorrichtung nach einem der Ansprüche 1 bis 3, **dadurch gekennzeichnet, dass** das Spannbetätigungselement (54) der Spanneinrichtung (34) an dem Stützelement (64) in Form eines einteiligen oder mehrteiligen Stützringes radial nach innen abstützbar ist.

5. Vorrichtung nach einem der Ansprüche 1 bis 4, **dadurch gekennzeichnet, dass** das Spannbetätigungselement (54) der Spanneinrichtung (34) mit Langlöchern (66) für an der Tragstruktur (30), insbesondere an dem Stützelement (64) der Tragstruktur (30), befestigte Führungselemente (68), insbesondere Bolzen, zur Aufnahme und Führung der wenigstens zwei Spannelemente (50) versehen ist.

6. Vorrichtung nach einem der Ansprüche 1 bis 5, **dadurch gekennzeichnet, dass** die Spanneinrichtung (34) einen, insbesondere aus einem hochwarmfesten Material ausgebildeten, Wurzelstützring (70) oder Badsicherungsring (72), der den wenigstens zwei Spannelementen (50) an den die zwei Bauteile (12', 12'') beaufschlagenden Spannflächen (52) zugeordnet ist, umfasst.

7. Vorrichtung nach einem der Ansprüche 1 bis 6, **dadurch gekennzeichnet, dass** der Wurzelstützring (70) oder der Badsicherungsring (72) von einer in den wenigstens zwei Spannelementen (50) vorgesehenen Nut (74) oder Ausnehmung (80) aufnehmbar ist, derart, dass die den zwei Bauteilen (12', 12'') zugewandte Oberfläche (76) des Wurzelstützringes (70) oder Badsicherungsringes (72) und die die zwei Bauteile (12', 12'') beaufschlagenden Spannflächen (52) zueinander in einer Ebene (78) fluchten.

8. Vorrichtung nach einem der Ansprüche 1 bis 7, **dadurch gekennzeichnet, dass** der Badsicherungsring (72) mit einer Ausnehmung (82) oder dergleichen Nut zur teilweisen Aufnahme von Schweißmaterial im Schweißbereich versehen ist.

9. Vorrichtung nach einem der Ansprüche 1 bis 8, **dadurch gekennzeichnet, dass** der Wurzelstützring (70) und der Badsicherungsring (72) miteinander auswechselbar sind.

10. Vorrichtung nach einem der Ansprüche 1 bis 9, **dadurch gekennzeichnet, dass** die Spanneinrichtung (34) eine an der Tragstruktur (30) befestigte Antriebseinrichtung (86) zur Verschiebung des Spannbetätigungselementes (54) auf oder parallel zu oder im Wesentlichen auf oder parallel zu der Längsachse (48) der Tragstruktur (30) umfasst.

11. Vorrichtung nach einem der Ansprüche 1 bis 10, **dadurch gekennzeichnet, dass** die Spanneinrichtung (34) wenigstens eine manuell, elektromotorisch, mechanisch, pneumatisch oder hydraulisch angetriebene und synchronisierte Linearachse (88) zur Verschiebung des Spannbetätigungselementes (54) auf oder parallel zu oder im Wesentlichen auf oder parallel zu der Längsachse (48) der Tragstruktur (30) umfasst.

12. Vorrichtung nach einem der Ansprüche 1 bis 11, **dadurch gekennzeichnet, dass** die wenigstens zwei Spannelemente (50) der Spanneinrichtung (34) jeweils als eine Spannbacke ausgebildet sind.

13. Vorrichtung nach einem der Ansprüche 1 bis 12, **dadurch gekennzeichnet, dass** die Spannfläche/n (52) zwischen den wenigstens zwei Spannelementen (50) und dem Spannbetätigungselement (54) und/oder die Gleitfläche/n (90) zwischen der Tragstruktur (30) oder dem Stützelement (62) der Tragstruktur (30) und dem Spannbetätigungselement (54) mit einer Beschichtung (92) aus Kunststoff, insbesondere aus Polytetrafluorethylen (PTFE), Polyoximethylen (POM) oder Polyimid (PI), mit oder ohne Aramid-, Glas-, Kohlen-, Nylon-, Polyethylen- und/oder Polyesterfaserverstärkung, und/oder einer Kombination daraus versehen ist/sind.

14. Vorrichtung nach einem der Ansprüche 1 bis 13, **dadurch gekennzeichnet, dass** der Spanneinrichtung (34) wenigstens eine Einrichtung (94) zur Bearbeitung mindestens eines Teils der zwei segmentartig ausgebildeten, dünnwandigen und hohlprofilierten Bauteile (12', 12'') zugeordnet ist.

15. Vorrichtung nach einem der Ansprüche 1 bis 14, **dadurch gekennzeichnet, dass** die wenigstens eine Einrichtung (94) zur Bearbeitung des mindestens einen Teils der zwei segmentartig ausgebildeten, dünnwandigen und hohlprofilierten Bauteile (12', 12'') als Schweiß- (98), Löt- oder Klebeeinrichtung bzw. Schneideeinrichtung bzw. Schleif-, Fräs-(96), Dreh- oder dergleichen flächen- und spanbearbeitende sowie güte- und materialprüfende Einrichtung ausgebildet ist.

16. Vorrichtung nach einem der Ansprüche 1 bis 15, **dadurch gekennzeichnet, dass** die Spanneinrichtung (34) an der Tragstruktur (30) gegenüber der wenigstens einen Einrichtung (94) zur Bearbeitung der zwei segmentartig ausgebildeten, dünnwandigen und hohlprofilierten Bauteile (12', 12'') relativ drehbar, insbesondere um die Längsachse (48) der Tragstruktur (30), und/oder verschwenkbar, insbesondere um eine horizontale Drehachse (38), angeordnet ist.

17. Verwendung einer Vorrichtung nach einem der vorhergehenden Ansprüche zum Einspannen, insbesondere in Umfangsrichtung spannungsfreien Einspannen, von segmentartig ausgebildeten, dünnwandigen und hohlzylindrischen Bauteilen (12', 12'') und Behältern, Domen sowie Boostergehäusen von Raketen oder ähnlichen hohizylindrischen Geräten großer Abmessungen.

18. Verwendung einer Vorrichtung nach einem der vorhergehenden Ansprüche 1 bis 16 zum Bearbeiten, insbesondere zum Verschweißen, Verlöten oder Verkleben bzw. Schneiden bzw. Schleifen, Fräsen, Drehen oder dergleichen Flächenbearbeitung, von segmentartig ausgebildeten, dünnwandigen und hohlzylindrischen Bauteilen (12', 12'') und Behältern, Domen sowie Boostergehäusen oder ähnlichen hohlzylindrischen Geräten großer Abmessungen.

19. Verwendung einer Vorrichtung nach einem der vorhergehenden Ansprüche 1 bis 16 zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgestalteten Bauteilen (12', 12'').

20. Verwendung einer Vorrichtung nach einem der vorhergehenden Ansprüche 1 bis 16 zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

## Claims

1. Device for clamping and orienting segmented, thin-walled and hollow profiled components (12', 12''), comprising a support structure (30) or similar frame structure supported on or against a base (32), and a device (34) which is accommodated in and retained by the support structure (30) and is used for clamping two segmented, thin-walled and hollow profiled components (12', 12''), whereby the clamping device (34) is designed in such a way that the clamping device (34) can act upon the two components (12', 12'') perpendicular to the longitudinal axis (48) of the support structure (30) and radially outward in the region of the common separation plane (46) of the two components, and the clamping device comprises at least two clamping elements (50) which have clamping surfaces (52) acting upon the two components (12', 12'') and which are arranged on a common plane and can be moved radially outward from inside, and vice versa, **characterized in that** the clamping device (34) comprises the at least two clamping elements (50) and a clamping actuation element (54) which commonly acts upon both the at least two clamping elements (50), whereby the clamping actuation element (54) of the clamping device (34) is designed like or as a tapered ring, in particular one that is formed of a single piece or is split into segments, and acts upon the at least two clamping elements (50) radially outward from inside by moving along or parallel to or substantially along or parallel to the longitudinal axis (48) of the support structure (30), whereby the clamping actuation element (54) of the clamping device (34) can be supported radially inward against a support element (64) in the form of a support ring.

2. Device according to claim 1, **characterized in that** the clamping actuation element (54) of the clamping device (34) comprises at least one inclined surface (60) facing away from the longitudinal axis (48) of the support structure (30) which is interlinked with accordingly designed sloped surfaces (62) of the at least two clamping elements (50), facing towards the longitudinal axis (48) of the support structure (30), in such a way that the at least two clamping elements (50) can be moved radially outward from inside, and vice versa, by moving the clamping actuation element (54) along or parallel to or substantially along or parallel to the longitudinal axis (48) of the support structure (30).

3. Device according to claims 1 or 2, **characterized in that** the clamping actuation element (54) of the clamping device (34) comprises a multitude of inclined surfaces (60) facing away from the longitudinal axis (48) of the support structure (30) and each having a planar design.

4. Device according to one of the claims 1 to 3, **characterized in that** the clamping actuation element (54) of the clamping device (34) can be supported radially inward against the support element (64) in the form of a single-piece or multi-piece support ring.

5. Device according to one of the claims 1 to 4, **characterized in that** the clamping actuation element (54) of the clamping device (34) is provided with oblong holes (66) for guiding elements (68), in particular bolts, attached to the support structure (30), in particular to the support element (64) of the support structure (30), for receiving and guiding the at least two clamping elements (50).

6. Device according to one of the claims 1 to 5, **characterized in that** the clamping device (34) comprises a root support ring (70) or bath securing ring (72), in particular made of a highly heat resistant material, which is assigned to the at least two clamping elements (50) at the clamping surfaces (52) acting upon the two components (12', 12'').

7. Device according to one of the claims 1 to 6, **characterized in that** the root support ring (70) or the bath securing ring (72) can fit into a groove (74) or recess (80) provided in the at least two clamping elements (50), in such a way that the surface (76) of the root support ring (70) or of the bath securing ring (72) facing towards the two components (12', 12'') and the clamping surfaces (52) acting upon the two components (12', 12'') are in alignment with each other on one plane (78).

8. Device according to one of the claims 1 to 7, **characterized in that** the bath securing ring (72) is provided with a recess (82) or similar groove for partially receiving welding material in the welding area.

9. Device according to one of the claims 1 to 8, **characterized in that** the root support ring (70) and the bath securing ring (72) can be exchanged against each other.

10. Device according to one of the claims 1 to 9, **characterized in that** the clamping device (34) comprises a driving device (86) attached to the support structure (30) for moving the clamping actuation element (54) along or parallel to or substantially along or parallel to the longitudinal axis (48) of the support structure (30).

11. Device according to one of the claims 1 to 10, **characterized in that** the clamping device (34) comprises at least one manually, electromotive, mechanically, pneumatically or hydraulically driven and synchronised linear axis (88) for moving the clamping actuation element (54) along or parallel to or substantially along or parallel to the longitudinal axis (48) of the support structure (30).

12. Device according to one of the claims 1 to 11, **characterized in that** the at least two clamping elements (50) of the clamping device (34) are each designed as a clamping jaw.

13. Device according to one of the claims 1 to 12, **characterized in that** the clamping surface/s (52) between the at least two clamping elements (50) and the clamping actuation element (54), and/or the sliding surface/s (90) between the support structure (30) or the support element (62) of the support structure (30) and the clamping actuation element (54) is/are provided with a plastic coating (92), in particular of polytetrafluorethylene (PTFE), polyoximethylene (POM) or polyimide (PI), with or without aramid, glass, carbon, nylon, polyethylene and/or polyester fibre reinforcement, and/or a combination of the above.

14. Device according to one of claims 1 to 13, **characterized in that** the clamping device (34) is assigned to at least one unit (94) for processing at least one part of the two segmented, thin-walled and hollow-profiled components (12', 12'').

15. Device according to one of claims 1 to 14, **characterized in that** the at least one unit (94) for processing the at least one part of the two segmented, thin-walled and hollow-profiled components (12', 12'') is designed as a welding (98), soldering or gluing unit and/or cutting and/or grinding, milling (96), turning or similar machining as well as quality and material-checking unit.

16. Device according to one of claims 1 to 15, **characterized in that** the clamping device (34) is arranged on the support structure (30) opposite to the at least one unit (94) for processing the two segmented, thin-walled and hollow-profiled components (12', 12''), relatively rotatable, in particular about the longitudinal axis (48) of the support structure (30), and/or pivotable, in particular about a horizontal rotation axis (38).

17. Use of a device according to one of the preceding claims for mounting, in particular tension-free mounting in circumferential direction, of segmented, thin-walled and hollow cylindrical components (12', 12'') and containers, domes as well as booster cases of rockets or similar hollow cylindrical devices of large dimensions.

18. Use of a device according to one of the preceding claims 1 to 16 for processing, in particular welding, soldering or gluing and/or cutting and/or grinding, milling, turning or similar machining, of segmented, thin-walled and hollow cylindrical components (12', 12'') and containers, domes as well as booster cases or similar hollow cylindrical devices of large dimensions.

19. Use of a device according to one of the preceding claims 1 to 16 for manufacturing rotationally symmetric and/or not rotationally symmetric shell-shaped components (12', 12''), particularly hemispherical, spherical-shaped, dome-shaped, ellipsoid-spherical shaped, cone-shaped or ellipsoid components or components in Cassini-form, semi-torus form or other similar cross-sectional shapes.

20. Use of a device according to one of the preceding claims 1 to 16 for manufacturing domes for rocket fuel tanks, satellite tanks, parabolic antennas, parabolic reflector shells, parabolic solar collectors, headlamp housings, container floors, tower cupolas, pressure domes or similar.

## Revendications

1. Dispositif destiné au serrage et à l'alignement de composants (12', 12'') analogues à des segments, à parois minces et de forme cylindrique creuse, comprenant une structure porteuse (30) ou un châssis-cadre similaire, soutenu(e) sur une base (32), et un système (34) reçu et maintenu par la structure porteuse (30), pour le serrage de deux composants (12', 12'') analogues à des segments, à parois minces et de forme cylindrique creuse, dans lequel le système de serrage (34) est réalisé de telle façon que les deux composants (12', 12'') sont susceptibles d'être sollicitées, dans la région de leur plan de séparation commun (46), par le système de serrage (34) perpendiculairement à l'axe longitudinal (48) de la structure porteuse (30) et radialement de l'intérieur vers l'extérieur, et au moins deux éléments de serrage (50), agencés dans un plan commun et déplaçables radialement de l'intérieur vers l'extérieur et inversement, avec des surfaces de serrage (52) qui sollicitent les deux composants (12', 12''), **caractérisé en ce que** le système de serrage (34) comprend lesdits au moins deux éléments de serrage (50) et un élément d'actionnement de serrage (54) qui sollicite conjointement lesdits au moins deux éléments de serrage (50), dans lequel l'élément d'actionnement de serrage (54) est réalisé en forme de bague conique, ou comme un anneau conique, en particulier d'un seul tenant ou subdivisé à la manière de segments, et sollicite lesdits au moins deux éléments de serrage (50) par déplacement vers l'axe longitudinal (48) ou parallèlement à celui-ci ou encore sensiblement vers l'axe longitudinal ou parallèlement à celui-ci de la structure porteuse (30), radialement de l'intérieur vers l'extérieur, et l'élément d'actionnement de serrage (54) du système de serrage (34) est susceptible de s'appuyer radialement vers l'intérieur sur un élément de soutien (64) sous la forme d'une bague de soutien.

2. Dispositif selon la revendication 1, **caractérisé en ce que** l'élément d'actionnement de serrage (54) du système de serrage (34) comprend au moins une surface oblique (60) détournée de l'axe longitudinal (48) de la structure porteuse (30), surface qui est en engagement avec des surfaces obliques (62), de réalisation correspondante et tournées vers l'axe longitudinal (48) de la structure porteuse (30), desdits au moins deux éléments de serrage (50), de telle manière que lesdits au moins deux éléments de serrage (50) sont déplaçables, par déplacement de l'élément d'actionnement de serrage (54) vers ou parallèlement à ou encore sensiblement vers ou parallèlement à l'axe longitudinal (48) de la structure porteuse (30), radialement de l'intérieur vers l'extérieur et inversement.

3. Dispositif selon la revendication 1 ou 2, **caractérisé en ce que** l'élément d'actionnement de serrage (54) du système de serrage (34) comprend une pluralité de surfaces obliques (60), qui sont réalisées détournées de l'axe longitudinal (48) de la structure porteuse (30) et respectivement sous forme plane.

4. Dispositif selon l'une des revendications 1 à 3, **caractérisé en ce que** l'élément d'actionnement de serrage (54) du système de serrage (34) est susceptible de s'appuyer contre l'élément de soutien (64), sous la forme d'une bague de soutien d'une seule pièce ou en plusieurs pièces, radialement vers l'intérieur.

5. Dispositif selon l'une des revendications 1 à 4, **caractérisé en ce que** l'élément d'actionnement de serrage (54) du système de serrage (34) est pourvu de trous oblongs (66) pour des éléments de guidage (68), en particulier des boulons, fixés sur la structure porteuse (30) et en particulier sur l'élément de soutien (64) de la structure porteuse (30), pour la réception et de guidage desdits au moins deux éléments de serrage (50).

6. Dispositif selon l'une des revendications 1 à 5, **caractérisé en ce que** le système de serrage (34) comprend une bague de soutien de base (70) ou une bague de fixation pour baignoire (72), en particulier réalisée en un matériau résistant aux hautes températures, bague qui est associée aux-dits au moins deux éléments de serrage (50) au niveau des surfaces de serrage (52) qui sollicitent les deux composants (12', 12'').

7. Dispositif selon l'une des revendications 1 à 6, **caractérisé en ce que** la bague de soutien de base (68) ou la bague de fixation pour baignoire (72) est susceptible d'être reçue par une gorge (74) ou un évidement (80) prévu dans lesdits au moins deux éléments de serrage (50), de telle façon que la surface (76), tournée vers les deux composants (12', 12''), de la bague de soutien de base (70) ou de la bague de fixation pour baignoire (72) et les surfaces de serrage (52) qui sollicitent les deux composants (12', 12'') sont alignées les unes par rapport aux autres dans un plan (78).

8. Dispositif selon l'une des revendications 1 à 7, **caractérisé en ce que** la bague de fixation pour baignoire (72) est pourvue d'un évidement (82) ou d'une gorge similaire pour recevoir partiellement du matériau de soudage dans la zone de soudage.

9. Dispositif selon l'une des revendications 1 à 8, **caractérisé en ce que** la bague de soutien de base (70) et la bague de fixation pour baignoire (72) sont mutuellement interchangeables.

10. Dispositif selon l'une des revendications 1 à 9, **caractérisé en ce que** le système de serrage (34) comprend un moyen d'entraînement (86), fixé sur la structure porteuse (30), pour déplacer l'élément d'actionnement de serrage (54) vers ou parallèlement ou encore sensiblement vers ou parallèlement à l'axe longitudinal (48) de la structure porteuse (30).

11. Dispositif selon l'une des revendications 1 à 10, **caractérisé en ce que** le système de serrage (34) comprend au moins un axe linéaire (88), entraîné manuellement, par un moteur électrique, mécaniquement, pneumatiquement ou hydrauliquement, et synchronisé, pour déplacer l'élément d'actionnement de serrage (54) vers ou parallèlement ou encore sensiblement vers ou parallèlement à l'axe longitudinal (48) de la structure porteuse (30).

12. Dispositif selon l'une des revendications 1 à 11, **caractérisé en ce que** lesdits au moins deux éléments de serrage (50) du système de serrage (34) sont réalisés chacun sous forme de mâchoire de serrage.

13. Dispositif selon l'une des revendications 1 à 12, **caractérisé en ce que** la ou les surface (s) de serrage (52) entre lesdits au moins deux éléments de serrage (50) et l'élément d'actionnement de serrage (54) et/ou la ou les surface(s) de glissement (90) entre la structure porteuse (30) ou l'élément de soutien (62) de la structure porteuse (30) et l'élément d'actionnement de serrage (54) est/sont pourvues d'un revêtement (92) en matière plastique, en particulier en polytétrafluoroéthylène (PTFE), polyoxyméthylène (POM) ou polyimide (PI), avec ou sans un renforcement en fibres aramides, fibres de verre, fibres de carbone, fibres de nylon, fibres de polyéthylène et/ou fibres de polyester, et/ou une combinaison de ces matières.

14. Dispositif selon l'une des revendications 1 à 13, **caractérisé en ce qu'**au moins un moyen (94) pour le traitement d'au moins une partie des deux composants (12', 12'') analogues à des segments, à parois minces et de forme cylindrique creuse, est associé au système de serrage (34).

15. Dispositif selon l'une des revendications 1 à 14, **caractérisé en ce que** ledit au moins un moyen (94) pour traiter au moins une partie des deux composants (12', 12'') analogues à des segments, à parois minces et de forme cylindrique creuse, est réalisé sous forme de moyen de soudure (98), moyen de brasage ou moyen de collage ou encore comme moyen de coupe ou moyen de meulage, de fraisage (96), de tournage ou de moyen similaire d'usinage de surface et d'usinage par enlèvement de matière, ainsi que de moyen de contrôle de qualité et de contrôle de matière.

16. Dispositif selon l'une des revendications 1 à 15, **caractérisé en ce que** le système de serrage (34) est agencé sur la structure porteuse (30) à l'opposé dudit au moins un moyen (94) pour le traitement desdites deux composants (12', 12'') analogues à des segments, à parois minces et de forme cylindrique creuse, avec possibilité de rotation relative, en particulier autour de l'axe longitudinal (48) de la structure porteuse (30), et/ou avec possibilité de pivotement, en particulier autour d'un axe de rotation horizontal (38).

17. Utilisation d'un dispositif selon l'une des revendications précédentes pour le serrage, en particulier pour le serrage sans contrainte en direction de la circonférence, de composants (12', 12'') analogues à des segments, à parois minces et de forme cylindrique creuse, et de récipients, de coupoles ainsi que de boîtiers de fusées d'appoint ou des engins cylindriques creux similaires présentant de grandes dimensions.

18. Utilisation d'un dispositif selon l'une des revendications précédentes 1 à 16 pour l'usinage, en particulier pour le soudage, le brasage ou le collage, ou encore pour la coupe, le meulage, le fraisage, le tournage ou l'usinage de surfaces
analogues, de composants (12', 12'') analogues à des segments, à parois minces et de forme cylindrique creuse, et de récipients, de coupoles ainsi que de fusées d'appoint ou des engins cylindriques creux similaires présentant de grandes dimensions.

19. Utilisation du dispositif selon l'une des revendications précédentes 1 à 16 pour la réalisation de composants (12', 12'') conçus à symétrie de révolution et/ou sans symétrie de révolution en forme de coque, en particulier en forme de demi-sphère, en forme de calotte sphérique, en forme de calotte, en forme de calotte ellipsoïdale, en forme conique, elliptique, en forme de "Cassini", en forme de demi-tore, ou présentant d'autres formes de section transversale similaires.

20. Utilisation du dispositif selon l'une des revendications précédentes 1 à 16 pour la réalisation de coupoles pour des réservoirs de carburant de fusées, des réservoirs de satellites, des antennes paraboliques, des coques à réflecteur en forme de parabole, des collecteurs solaires en forme de parabole, des boîtiers de projecteurs, des fonds de récipients, des coupoles de tourelles, de calottes sous pression, ou similaires.
